Europäisches Patentamt

European Patent Office

Office européen des brevets

(11) Veröffentlichungsnummer: **0 541 050 A2**

## (12) EUROPÄISCHE PATENTANMELDUNG

(21) Anmeldenummer: **92118858.7**

(22) Anmeldetag: **04.11.92**

(51) Int. Cl.⁵: **D01F 9/00**, D01F 6/88,
D01F 8/18, D01F 8/04

(30) Priorität: **07.11.91 DE 4136694**

(43) Veröffentlichungstag der Anmeldung:
**12.05.93 Patentblatt 93/19**

(84) Benannte Vertragsstaaten:
**AT BE CH DE DK ES FR GB IT LI NL PT SE**

(71) Anmelder: **EMS−INVENTA AG**
**Selnaustrasse 16**
**CH−8001 Zürich(CH)**

(72) Erfinder: **Buehler, Friedrich Severin,**
**Dr.rer.nat. Dipl.−Chem**
**Caznerwiese am Bach 8 K**
**CH−7430 Thusis(CH)**
Erfinder: **Baron, Viktor, Dr. rer. nat.**
**Via Calanda 25**
**CH−7013 Domat/Ems(CH)**
Erfinder: **Schmid, Eduard, Dr. sc. nat.**
**Valbeuna**
**CH−7402 Bonaduz(CH)**
Erfinder: **Meier, Peter, Dr. sc. tech.**
**Dipl.−Chem. ETH**
**Pfannenstilstrasse 18**
**CH−8820 Wädenswil(CH)**
Erfinder: **Schultze, Hans Joachim, Dr. rer. nat.**
**Tittwiesenstrasse 11**
**CH−7000 Chur(DE)**

(54) **Stärkefaser, Verfahren zu ihrer Herstellung sowie ihre Verwendung.**

㊗ Die Erfindung betrifft eine Stärkefaser, die nach dem Schmelzespinnverfahren hergestellt ist und aus den folgenden Komponenten besteht: (A) 1 bis 100 Gew.−Teilen mindestens einer Stärkeformmasse aus: (i) 96 bis 56 Gew.−Teilen mindestens einer modifizierten und/oder nicht−modifizierten Stärke, (ii) 4 bis 40 Gew.−Teilen mindestens eines auf diesem Gebiet üblichen Weichmachers und/oder eines Destrukturierungsmittels, (iii) 0 bis 4 Gew.−Teilen mindestens eines Additivs, ausgewählt aus der Gruppe, die Harnstoff, Harnstoffderivate, Emulgatoren, Gleitmittel, Proteine und deren Alkalisalze umfasst, wobei sich die Gew.−Teile der Komponenten (i), (ii) und (iii) auf 100 ergänzen, und (B) 99 bis 0 Gew.−Teilen mindestens eines ausgewählten schmelzespinnbaren Polymeren, wobei sich die Gew.−Teile der Komponenten (A) und (B) auf 100 ergänzen, sowie gegebenenfalls (C) 0 bis 20 Gew.−Teilen dem Stand der Technik entsprechenden üblichen Zusatzstoffen für Schmelzespinnmassen. Die Erfindung betrifft ferner ein Verfahren zur Herstellung dieser Stärkefasern nach dem bekannten Schmelzespinnverfahren. Weiterhin betrifft die Erfindung unterschiedliche Anwendungsgebiete für erfindungsgemässe Fasern, wobei diese die unterschiedlichsten Ausbildungsformen besitzen können.

Die Erfindung betrifft den in den Patentansprüchen angegebenen Gegenstand. Die Erfindung betrifft insbesondere eine Stärkefaser, die nach dem Schmelzespinnverfahren hergestellt ist und aus den folgenden Komponenten besteht: (A) 1 bis 100 Gew.−Teilen einer Stärkeformmasse aus: (i) 96 bis 56 Gew.−Teilen mindestens einer modifizierten und/oder nicht−modifizierten Stärke, (ii) 4 bis 40 Gew.−Teilen mindestens einem auf diesem Gebiet üblichen Weichmacher und/oder eines Destrukturierungsmittels, (iii) 0 bis 4 Gew.−Teilen mindestens eines Additivs, ausgewählt aus der Gruppe, die Harnstoff, Harnstoffderivate, Emulgatoren, Proteine und deren Alkalisalze sowie Gleitmittel umfasst, wobei sich die Gew.−Teile der Komponenten (i), (ii) und (iii) auf 100 ergänzen und (B) 99 bis 0 Gew.−Teilen mindestens eines ausgewählten schmelzespinnbaren Polymeren, wobei sich die Gew.−Teile der Komponenten (A) und (B) auf 100 ergänzen sowie gegebenenfalls zusätzlich (C) 0 bis 20 Gew.−Teilen dem Stand der Technik entsprechenden üblichen Zusatzstoffen für Schmelzespinnmassen. In einer anderen Ausführungsform betrifft die Erfindung eine Stärkefaser, die nach dem Schmelzespinnverfahren hergestellt ist und aus folgenden Komponenten besteht: (A) 10 bis 100 Gew.−Teilen, bevorzugt 30 bis 100 Gew.−Teilen, einer Stärkeformmasse aus: (i) 90 bis 66 Gew.−Teilen mindestens einer modifizierten und/oder nicht−modifizierten Stärke, (ii) 10 bis 30 Gew.−Teilen mindestens einem auf diesem Gebiet üblichen Weich−machers, (iii) 0 bis 4 Gew.−Teilen mindestens eines Additivs, ausgewählt aus der Gruppe, die Harnstoff und/oder Harnstoffderivate und/oder Emulgatoren und/oder Gleitmittel umfasst, wobei sich die Gew.−Teile der Komponenten (i), (ii) und (iii) auf 100 ergänzen, und (B) 90 bis 0 Gew.−Teilen, bevorzugt 70 bis 0 Gew.−Teilen, mindestens eines ausgewählten schmelzespinnbaren Polymeren, wobei sich die Gew.−Teile der Komponenten (A) und (B) auf 100 ergänzen, sowie gegebenenfalls zusätzlich (C) 0 bis 10 Gew.−Teilen dem Stand der Technik entsprechenden üblichen Zusatzstoffen für Schmelzespinnmassen. Weiterhin betrifft die Erfindung ein Verfahren zur Herstellung von Stärkefasern nach dem an sich bekannten Schmelzespinnverfahren, das folgende Schritte umfasst: (a) Herstellung mindestens einer Spinnschmelze, (b) Schmelzespinnen mit wahlweise vorgeschalteter Schmelzefiltration, (c) Kühlen, (d) Aufbringen der Spinnpräparation, (d) Verstrecken und (f) Nachbehandlung, wobei man in Schritt (a) die Komponenten der Stärkefaser, die wahlweise separat oder gemeinsam vorgranuliert sind, in mindestens einem Spinnextruder aufschmilzt, und ohne abzukühlen die mindestens eine Schmelzespinnmasse zum Spinndüsenpaket fördert, wobei wahlweise eine Schmelzefiltration vorgeschaltet ist.

Schliesslich betrifft die Erfindung die Verwendung von erfindungsgemässen Stärkefasern, die in den unterschiedlichsten Ausführungsformen Anwendung finden sowie durch unterschiedlichste Modifizierung besondere Eigenschaften erhalten haben.

Stärke ist ein pflanzliches Kohlehydrat und es gibt Bestrebungen, sie als sogenannten "natürlichen Kunststoff" auf den verschiedensten Gebieten unter Einsatz der bekannten Kunststoffverarbeitungstechnikenzur Anwendung zu bringen.

Es ist bekannt, dass sich Amylose, welche ein Bestandteil der Stärke ist, in alkalischen oder auch in formaldehydhaltigen wässrigen Lösungen löst. In beiden Fällen werden mehr oder minder zähflüssige Lösungen erhalten. Die Stabilität derartiger Lösungen ist in erster Linie eine Frage der Konzentration an Alkali bzw. an Formaldehyd. Beide Lösungsarten, die alkalische Amyloselösung wie auch die formaldehydhaltige Amyloselösung, sind für die Erzeugung von faden− oder folienähnlichen Gebilden geeignet.

Aus der DE−PS 10 62 325 ist bekannt, Fäden oder Folien aus Amylose herzustellen, wobei jedoch die Herstellung aus Lösung in Fällbädern, also über das Nassspinnen erfolgt und nicht auf thermoplastischem Wege.

Amylosehaltige Filamente nach dem Trockenspinnverfahren herzustellen ist aus US 3 499 074 bekannt. Das Trockenspinnverfahren ist allerdings technologisch aufwendig zu beherrschen und darüber hinaus von geringer wirtschaftlicher Bedeutung.

In der DE−OS 23 62 991 werden Arzneimittelpräparate mit verzögerter Wirkstoffabgabe zur direkten Einführung in Körperhöhlen beschrieben. Ein Gemisch aus Wirkstoff und Polymerisat, u.a. auch Stärke, soll durch Schmelzespinnen zu einem Strang verarbeitet und dieser dann anschliessend zu Pellets zerkleinert werden. Diese Pellets sollen dann in die üblichen Schmelzespinn−Vorrichtungen gegeben und zu feinen Fasern versponnen werden. Diese "Wirkstoff−Polymerisat−Fasern" werden in eine zur Herstellung von "Wattebäuschchen" geeignete Länge zerschnitten und trocken zu "Wattebäuschchen" kardiert. Die so hergestellten Präparate sind dann einsatzfertig. In der DE−OS 23 62 991 wird zwar ganz allgemein das Schmelzespinnverfahren erwähnt, jedoch sind dort das Verfahren und die Vorrichtungen nicht näher beschrieben. Weiterhin wird in den Beispielen der DE−OS 23 62 991 ausschliesslich die Verwendung von Hydroxypropylcellulose beschrieben.

Das oben genannte bekannte Schmelzespinnverfahren ist heutzutage nicht nur die eleganteste und am meisten benutzte Methode zur Herstellung von Synthesefasern, sondern auch die wirtschaftlichste. Allerdings müssen die Schmelzespinnmassen weit höheren Anforderungen genügen als Formmassen, die zu Formkörpern, wie Spritzgiesslinge oder Folien, verarbeitet werden.

Der Erfingung liegt daher die Aufgabe zugrunde, Stärkefasern mit und ohne Polymeranteil, hergestellt nach dem an sich bekannten Schmelzespinnverfahren, zur Verfügung zu stellen, die bevorzugt aus einer biologisch abbaubaren Schmelzespinnmasse herstellbar sind. Schliesslich sollen die so hergestellten Fasern auf den verschiedensten Anwendungsgebieten zum Einsatz kommen können, wobei die erfindungsgemässen Fasern vorher durch spezielle Verfahrensschritte besonders ausgebildet sein können.

Diese Aufgabe wird durch die Stärkefaser mit den Merkmalen des Anspruchs 1 und durch das Verfahren zur Herstellung dieser Fasern mit den Merkmalen des Anspruchs 28 gelöst. In den Ansprüchen 41 bis 52 sind spezielle Anwendungsgebiete für die erfindungsgemässen Fasern enthalten. Die Unteransprüche enthalten vorteilhafte Ausgestaltungen der Erfindung.

Ueberraschenderweise wurde nun festgestellt, dass aus Stärke, Destrukturierungsmittel und/oder Weichmacher sowie ausgewählten Additiven eine thermoplastische Stärkemasse hergestellt werden kann, die den Anforderungen des Schmelzespinnprozesses genügt. Weiterhin wurde festgestellt, dass sich diese schmelzespinnbare Stärkeformmasse [Komponente (A)] auch mit bekannten schmelzespinnbaren Polymeren [Komponente (B)] nach dem Schmelzespinnverfahren verspinnen lässt, wobei alle Kombinationen möglich sind, d.h. die beiden Komponenten (A) und (B) können zusammen in einer Stärke−Polymer− Faser oder in einer Koextrusionsfaser getrennt nebeneinander oder auch in einem sogenanntem Mischgarn vorliegen. Ferner können erfindungsgemässe Fasern runde, hohle oder multilobale Faserquerschnitte aufweisen.

Der verwendete Begriff "Faser" schliesst weiterhin alle Herstellungsformen von Fasern ein, wie Filament, Monofil (Draht), Kabel, Filamentgarn, Flock, Spinnfaser, Spinnband und Borste.

Die erfindungsgemässe Stärkefaser ist nach dem Schmelzespinnverfahren hergestellt, und besteht aus folgenden Komponenten:

(A) 1 bis 100 Gew.−Teilen mindestens einer schmelzespinnbaren Stärkeformmasse aus:

(i) 96 bis 56 Gew.−Teilen mindestens einer modifizierten und/oder nicht−modifizierten Stärke,

(ii) 4 bis 40 Gew.−Teilen mindestens einem auf diesem Gebiet üblichen Weichmachers und/oder eines Destrukturierungsmittels,

(iii) 0 bis 4 Gew.−Teilen mindestens eines Additives, ausgewählt aus der Gruppe, die Harnstoff, Harnstoffderivate, Emulgatoren, Gleitmittel, Proteine und deren Alkalisalze, umfasst,

wobei sich die Gew.−Teile der Komponenten (i), (ii) und (iii) auf 100 ergänzen,

und

(B) 99 bis 0 Gew.−Teilen mindestens eines ausgewählten schmelzespinnbaren Polymeren, wobei sich die Gew.−Teile der Komponente (A) und (B) auf 100 ergänzen,

sowie gegebenenfalls zusätzlich

(C) 0 bis 20 Gew.−Teilen dem Stand der Technik entsprechenden üblichen Zusatzstoffen für Schmelzespinnmassen.

Vorzugsweise besteht das Additiv (Komponente [(A) (iii)]) aus 0,1 bis 2 Gew.−Teilen Harnstoff und/oder Harnstoffderivaten und/oder 0,1 bis 2 Gew.−Teilen mindestens eines Emulgators.

Vorzugsweise besteht die Schmelzespinnmasse aus 20 bis 95 Gew.−Teilen, bevorzugt 20 bis 80 Gew.−Teilen, besonders bevorzugt 50 bis 80 Gew.−Teilen der Komponente (A) und aus 80 bis 5 Gew.− Teilen, bevorzugt 80 bis 20 Gew.−Teilen, besonders bevorzugt 50 bis 20 Gew.−Teilen der Komponente (B).

Komponente (A) enthält vorzugsweise den Weichmacher in Mengen von 9 bis 40 Gew.−Teilen, bevorzugt 10 bis 30 Gew.−Teilen.

In einer anderen Ausführungsform besteht die erfindungsgemässe Stärkefaser, die nach dem Schmelzespinnverfahren hergestellt wird, aus folgenden Komponenten:

(A) 10 bis 100 Gew.−Teilen, bevorzugt 30 bis 100 Gew.−Teilen, mindestens einer schmelzespinnbaren Stärkeformmasse aus:

(i) 90 bis 66 Gew.−Teilen mindestens einer modifizierten und/oder nicht−modifizierten Stärke,

(ii) 10 bis 30 Gew.−Teilen mindestens eines auf diesem Gebiet üblichen Weichmachers,

(iii) 0 bis 4 Gew.−Teilen mindestens eines Additivs, ausgewählt aus der Gruppe, die Harnstoff, Harnstoffderivate, Emulgatoren und Gleitmittel umfasst,

wobei sich die Gew.−Teile der Komponenten (i), (ii) und (iii) auf 100 ergänzen,

und

(B) 90 bis 0 Gew.−Teilen, bevorzugt 70 bis 0 Gew.−Teilen, mindestens eines ausgewählten schmelzespinnbaren Polymeren,

wobei sich die Gew.−Teile der Komponenten (A) und (B) auf 100 ergänzen,

sowie gegebenenfalls zusätzlich

(C) 0 bis 10 Gew. – Teilen dem Stand der Technik entsprechenden üblichen Zusatzstoffen für Schmel – zespinnmassen.

Die erfindungsgemäss einzusetzende, modifizierte oder unmodifizierte Stärke besitzt einen natürlichen Wassergehalt von 5 bis 16 Gew. – %, bevorzugt 5 bis 12 Gew. – %, besonders bevorzugt 6 bis 8 Gew. – %.

Die Herstellung der bevorzugt verwendeten Stärkeformmasse erfolgt über ein spezielles Verfahren, welches in der europäischen Patentanmeldung P 92 108 818.3 beschrieben ist, wobei die Stärke mit natürlichem Wassergehalt, mindestens einem Weichmacher und Harnstoff und/oder Harnstoffderivaten sowie mindestens einem Emulgator bei hinreichend erhöhten Temperaturen und Drucken in einem Extruder aufgeschlossen und als Schmelze extrudiert wird.

Der Amylosegehalt der eingesetzten modifizierten und/oder nicht – modifizierten Stärke liegt bei 20 bis 100 Gew. – %, bevorzugt 50 bis 100 Gew. – %, besonders bevorzugt bei 65 bis 100 Gew. – %.

Die modifizierte Stärke ist bevorzugt eine chemisch modifizierte, die durch Umsetzung ihrer OH – Gruppen mit Alkylenoxiden oder anderen ether –, ester –, urethan –, carbamat – und/oder isocyanat – bildenden Stoffen modifiziert wurde. Bevorzugt sind Hydroxy – $C_2$ bis $C_6$ – Alkyl –, Acetyl – oder Carba – matstärken oder deren Mischungen.

Der Substitutionsgrad der chemisch modifizierten Stärke beträgt 0,01 bis 3,0, bevorzugt 0,05 bis 2,0, besonders bevorzugt 0,05 bis 1,0.

Für wasserfeste Stärkefasern ist es aber auch möglich, hydrophobe Stärkederivate, wie Stärkeacetat, mit einem Substitutionsgrad von 2 bis 3, bevorzugt 2,25 bis 2.75, einzusetzen.

Der mindestens eine Weichmacher ist eine organische Verbindung mit mindestens einer Hydroxyl – gruppe, bevorzugt Polyol, besonders bevorzugt Sorbitol, Mannitol, D – Glukose, Glycerol, Ethylenglykol, Polyethylenglykol, Propylenglykol oder deren Mischungen.

Das mindestens eine Additiv wird in Mengen von 0 bis 4 Gew. – Teilen zugesetzt. Bevorzugt sind hierbei Harnstoff und/oder Harnstoffderivate und/oder Emulgatoren und/oder Gleitmittel und/oder Proteine und deren Alkalisalze.

Komponente [(A)(iii)] ist bevorzugt 0,1 bis 2 Gew. – Teile Harnstoff und/oder Harnstoffderivate und/oder 0,1 bis 2 Gew. – Teilen mindestens eines Emulgators.

Die schmelzespinnbare Stärkeformmasse enthält bevorzugterweise den Emulgator in Mengen von 0,1 bis 1 Gew. – Teilen, bevorzugt 0,2 Gew. – Teilen und den Harnstoff und/oder die Harnstoffderivate in Mengen von 0,1 bis 2 Gew. – Teilen, bevorzugt 1 Gew. – Teil.

Der Emulgator ist insbesondere eine Verbindung mit einem Hydrophil – Lipophil – Balance – Wert (HLB – Wert) von 0 bis 20,0, bevorzugt 10,0 bis 20,0. Besonders geeignete Emulgatoren sind Metallstearate und Glycerolmonostearat.

Als Komponente (B) eignen sich ausgewählte schmelzespinnbare Polymere, die einen Schmelz – oder Erweichungspunkt von 50 bis 220 ˚C besitzen. Bevorzugt sind Polymere, die einen Melt – Flow – Index (MFI) von 10 bis 10 000 Pa.s (bei 21.2 N und einer Temperatur von 30 ˚C über dem Schmelz – oder Erweichungspunkt) besitzen. Besonders geeignet sind Polymere mit einem Schmelz – oder Erweichungs – punkt von 50 bis 160 ˚C und einem Melt – Flow – Index (MFI) von 50 bis 8000 Pa.s.

Im Hinblick auf die biologische Abbaubarkeit sind als Komponente (B) Materialien bevorzugt, die selbst biologisch oder in homogenen Stärke – Polymer – Mischungen biologisch abbaubar sind, wie Polycaprolac – ton, Polyhydroxybutyrate, Polyhydroxyvaleriate, Polylactide, und deren Mischungen sowie lineare aliphati – sche Polymere wie Polyamide, Polyester, Polyether, Polyurethane.

Als Komponente (B) eignen sich insbesondere ausgewählte aliphatische Polyamide, Copolyamide, Polyester und Copolyester.

Bevozugt sind hierbei Homopolyamide und/oder Copolyamide aus 0> – Aminocarbonsäuren mit 2 bis 12 C – Atomen, bevorzugt 6 bis 12 C – Atomen und/oder Lactamen mit 4 bis 12 C – Atomen, bevorzugt 6 bis 12 C – Atomen und/oder aus Diaminen, bevorzugt aliphatischen Diaminen, mit 2 bis 12 C – Atomen, bevorzugt mit 2 bis 6 C – Atomen, Polyetherdiaminen und Dicarbonsäuren, bevorzugt linearen Dicarbonsäuren, 2 bis 12 C – Atomen und/oder dimerisierter Fettsäuren, besonders bevorzugt Lactam – 6, Lactam – 11, Lactam – 12, ω – Aminocapronsäure, ω – Aminoundecansäure, ω – Aminododecansäure, Dimethylendiamin, Tetrame – thylendiamin, Hexamethylendiamin, Polyetherdiamin, Oxalsäure, Bernsteinsäure, Adipinsäure, Sebazinsäu – re, Dodecandisäure, Azelainsäure, dimerisierte Fettsäure aus gesättigten Fettsäuren mit 17 bis 19 C – Atomen oder deren Mischungen ist.

Als dem Stand der Technik entsprechende Zusatzstoffe können optische Aufheller und/oder Stabilisa – toren und/oder Antioxidantien und/oder Antiflammmittel und/oder Farbstoffe und/oder Pigmente und/oder Mattierungsmittel und/oder Füllstoffe und/oder Verarbeitungshilfsmittel und/oder Vernetzungs – /Verzweigungsmittel zusätzlich als Komponente (C) in Mengen von 0 bis 20 Gew. – Teilen eingesetzt werden, wobei die Vernetzungs – oder Verzweigungsmittel isocyanat –, formaldehyd –, epoxy –,

anhydrid−, ether−, ester− und/oder amid−bildende Gruppen enthalten.

Das Verfahren zur Herstellung von Stärkefasern aus einer Schmelzespinnmasse nach dem an sich bekannten Schmelzespinnverfahren, umfasst die folgenden Schritte:

(a) Herstellung einer Spinnschmelze,

(b) Schmelzespinnen mit wahlweise vorgeschalteter Schmelzefiltration,

(c) Kühlen,

(d) Aufbringen der Spinnpräparation

(e) Verstrecken

und

(f) Nachbehandlung

wobei man in Schritt (a) die Komponenten der Stärkefaser, die wahlweise separat oder gemeinsam vorgranuliert sind, in mindestens einem Spinnextruder aufschmilzt, und ohne abzukühlen zum Spinndüsenpaket fördert, wobei wahlweise eine Schmelzefiltration vorgeschaltet ist. Uebliche Spinntemperaturen liegen im Bereich grösser als 120°C.

Der Wassergehalt der Spinnschmelze wird auf 1 bis 15 Gew.−%, bevorzugt auf 2 bis 10 Gew.−%, besonders bevorzugt auf 5 bis 8 Gew.−%, bezogen auf den Anteil der schmelzespinnbaren Stärkeformmasse, eingestellt.

Das Spinndüsenpaket besteht aus einem an sich bekannten Aufbau, wobei der trichterförmige Verteilereinsatz der Fliessfähigkeit der erfindungsgemässen Spinnschmelze so angepasst wird, dass jede Düsenöffnung mit gleicher Fliessgeschwindigkeit durchflossen wird. Die Spinndüsenplatte kann eine bis mehrere Tausend Düsenbohrungen besitzen mit zur Faserherstellung üblichen Lochdurchmessern.

Nach dem Spinndüsenpaket passieren die Spinnfäden eine Kühlstrecke, werden mit einer Spinnpräparation versehen und aufgespult oder in Kannen abgelegt. Als Kühlmedim werden Flüssigkeiten oder Gase verwendet. Geeignete Kühlflüssigkeiten für wasserlösliche Fasern sind unpolare, mit Wasser unverträgliche Medien, die bei Raumtemperatur flüssig sind. Bevorzugt sind hierbei Siliconöl oder Fettsäureester. Für wasserfeste Fasern wird bevorzugt Wasser verwendet. Als trockene Kühlstrecken werden Blasschächte eingesetzt, in denen die Spinnfäden mit kalter Luft, Stickstoff oder Kohlendioxid als Kühlgas abgekühlt werden.

Die aufgespulten oder abgelegten Spinnfäden können nun über eine Streckanlage geführt, verstreckt und als glattes Filament aufgespult, oder gegebenenfalls gekräuselt, fixiert und zu Stapelfasern geschnitten werden.

Die Spinnfäden können aber auch direkt weiterverstreckt und als glattes Filament aufgespult oder gegebenenfalls gekräuselt und zu Stapelfasern geschnitten werden.

Geeignete Streckanlagen sind für glatte Multifilamente Streckzwirn− oder Streckspulmaschinen oder Spinnstreckspulanlagen, für Monofilamente kompakte Monofil−Spinnstreckanlagen, für Stapelfasern Streckstrassen und Kompaktspinnstreckanlagen. Diese Streckanlagen können ausgerüstet sein mit beheizbaren oder zum Teil nicht beheizbaren Galetten und Streckwerken sowie Verlegerollen, des weiteren mit Dampf−, Heissluft− und Infrarotkanälen, Aviviervorrichtungen, Kräuseleinheiten, Trocknern, Schneidanlagen u.a. Einheiten.

Im Anschluss an den Streckprozess können alle bekannten Ausrüstungsmassnahmen durchgeführt werden, wie z.B. das Aufbringen einer Avivage, die bevorzugt Substanzen mit unpolaren Endgruppen und/oder polaren Kopfgruppen enthält, wobei sich die polaren Kopfgruppen an der Oberfläche der Faser verankern und sich die unpolaren Enden aussen anordnen. Bevorzugte Aviviermittel sind Fettsäuren, Wachse, Seifen und Polysaccharidderivate.

Das Fixieren bzw. Relaxieren der Filamente oder Fasern wird zumeist auf den genannten Anlagen nach dem Streckvorgang durchgeführt.

Fäden aus 100% Komponente (A) und Fäden mit hohem Anteil an Komponente (A) können zwecks Herstellung besonders feiner Titer dem Prozess der plastischen Verdehnung unterworfen werden, wobei diese Fäden in der Verdehnungsstufe bevorzugt mit Wasserdampf behandelt und danach mit Luft getrocknet werden.

Die schnellgesponnenen Multifilamente können auf hierfür bekannten Maschinen strecktexturiert, die verstreckten Multifilamente texturiert werden.

Erfindungsgemässe Fasern umfassen:

a) Fasern, hergestellt aus Stärke

b) Fasern, hergestellt aus einer Stärke−Polymer−Mischung oder einem Stärke−Polymer−Blend

c) Fasern, ausgebildet als Koextrusions− oder Mehrkomponentenfasern, wie z.B. Bikomponentenfasern

d) Fasern, ausgebildet als Mischgarne.

Zur Herstellung der oben genannten erfindungsgemässen Mischgarne können die getrennt aus Komponente (A) und(B) hergestellten Garne gemeinsam verzwirnt, verwirbelt oder texturiert werden. Prinzipiell ist auch ein gemeinsames Verspinnen möglich, wobei zwei getrennte Spinnextruder verwendet werden, sofern die für den Spinnprozess relevanten Eigenschaften der beiden Komponenten (A) und (B) entsprechend ähnlich sind.

Zur Herstellung der oben genannten erfindungsgemässen Stärke – Polymer – Fasern werden die Granulate der Komponenten (A) und (B) entweder vorgemischt oder einzeln in den Spinnextruder dosiert. Es ist auch möglich, in einem vorgeschalteten Extrusions – und gegebenenfalls Granulierschritt ein Spinnmaterial herzustellen, das die Komponenten (A) und (B) bereits schmelzegemischt enthält.

Für erfindungsgemässe Fasern eröffnen sich die vielfältigsten Anwendungsgebiete. Fasern mit ganz speziellen Verwendungsmöglichkeiten lassen sich durch entsprechende Variation von Komponente (A) erhalten. Je nach Hydrophilie der verwendeten Komponente (A) ist es z. B. möglich, in erfindungsgemässen Fasern bestehend aus Komponente (A) und (B) kaltwasserlösliche, heisswasserlösliche oder wasserunlösliche Bereiche einzubauen.

Zur Herstellung von porösen Fasern werden in einem ersten Schritt Stärke – Polymer – Fasern hergestellt, die in einem zweiten Schritt mit einem Mittel behandelt werden, welches Lösungsmittel nur für eine der beiden Stärkefaserkomponenten (A) oder (B) ist.

Zur Herstellung von erfindungsgemässen Koextrusions – oder Mehrkomponentenfasern werden im Schmelzespinnschritt (b) die Komponenten (A) und (B) getrennt zur Spinndüsenplatte gefördert und an der Spinndüse vereinigt, ohne dass eine Phasenvermischung auftritt, und wobei gegebenenfalls beide oder eine der beiden Komponenten einen Haftvermittler enthalten können. Auf diese Weise können auch Feinstfasern, die in einer Matrix eingebettet sind, hergestellt werden.

In einem weiteren bevorzugten Verfahren zur Herstellung von Hohlfasern, Profilfasern oder porösen Fasern werden die gegebenenfalls zerschnittenen Koextrusionsfasern in ein gegebenenfalls beheiztes Lösungsmittel – oder Wasserbad geleitet, wobei die jeweils lösliche Komponente aus der Faser vollständig oder abschnittsweise herausgelöst wird. Bevorzugt sind hierbei Bi – oder Mehrkomponentenfasern, deren Komponente (A) sich aufgrund ihres hydrophilen Charakters in einem heissen Wasserbad auflöst, wobei poröse Fasern erhalten werden. Ferner kann die Methode auch zur Herstellung von Hohlfasern verwendet werden, wobei der koextrudierte Kern, welcher bevorzugt aus Komponente (A) besteht, alle möglichen Formen, wie rund, sternförmig, eckig, haben kann, sodass Hohlfasern mit definierten geometrischen Hohlräumen und einstellbaren Schnittlängen erhältlich sind. Die Koextrusionsfaserkerne können hierbei kontinuierlich oder abschnittsweise eingebaut sein und nachträglich ganz oder teilweise ausgelöst werden.

Eine weitere besondere erfindungsgemässe Ausführungsform der Erfindung ist das Verfahren zur Herstellung von superfeinen Fasern oder Feinstfasern, die zur Herstellung von Kunstwildleder, wie z.B. Alcantara, oder zur Herstellung von feinstporigen Filtervliesen verwendet werden können. Komponente (A) ist hierbei bevorzugt das Matrixmaterial für die Herstellung einer solchen Feinstfaser. Die gegebenenfalls zerschnittene Kern – Mantel – Faser wird durch ein Lösungsmittel – oder gegebenenfalls beheiztes Wasserbad geleitet, wobei der lösliche Mantel weggelöst wird und so die Feinstfaser zugänglich ist. Vorteilhaft ist hier die schonende, umweltfreundliche und wirtschaftliche Ablösung des Matrixmaterials, da die wässrige Lösung der bevorzugt verwendeten Komponente (A) über biologischen Abbau entsorgt werden kann.

Ist der Mengenanteil einer heisswasserlöslichen Komponente (A) in erfindungsgemässer Faser grösser als 50%, so kann diese Faser nach Gebrauch umweltfreundlich entsorgt werden: Heisswasserbehandlung einer solchen Faser hinterlässt einen feinpulvrigen Niederschlag von Komponente (B), der absinkt, wenn die Dichte grösser als die des Wassers ist (PA, PES etc.). Das mit Komponente (A) beladene Abwasser ist vollkommen biologisch abbaubar und der Polymerniederschlag kann abfiltriert und regeneriert werden.

Ueberraschenderweise ist in homogenen Mischungen aus Stärke und linearen aliphatischen Polyamiden oder Polyestern oder Polyethern die feindispergierte Polymerkomponente ebenfalls dem biologischen Abbau zugänglich ist, wobei der biologische Abbau desto schneller erfolgt, je homogener die Komponenten vorliegen. Ferner hängt die Abbaugeschwindigkeit auch noch von der Länge der Kohlenstoffkette zwischen den hydrolysierbaren Gruppen ab. Beträgt der Mengenanteil von Komponente (A) 100%, so wird ein ungewöhnlich rascher biologischer Abbau in weniger als 20 Tagen beobachtet.

Als besonders bevorzugte Ausbildungsformen erfindungsgemässer Fasern sind somit erhältlich:
a) Stärkefasern ohne Polymerzusätze, d.h. ohne Komponente (B)
b) Synthesefasern mit Stärkezusatz, d.h. Fasern aus den Komponenten (A) und (B)
c) poröse Synthesefasern,
d) Synthese – Hohlfasern oder Stärke – Hohlfasern,
e) Synthese – Feinstfasern oder Stärke – Feinstfasern,

f) Stärkefasern mit Polyhydroxybuttersäure, Polyhydroxyvaleriansäure, Polycaprolacton, Polylactiden, Polyglykoliden,

g) Stärkederivatfasern ohne Polymerzusätzen, d.h. ohne Komponente (B),

h) Stärkederivatfasern mit Polymerzusätzen, d.h. mit Komponente (B).

Erfindungsgemässe Fasern können für biologisch abbaubare Gewebe, Vliese, Strickwaren u.ä. einge‑setzt werden oder auch zur Modifizierung von konventionellen Fasern dienen, insbesondere für Filter, Haushaltsgewebe, Hygienevliese etc. und dergleichen.

Gewebe und Vliese aus diesen Materialien sind einsetzbar für Säcke, Tücher, Netze, insbesondere zum Verpacken von Agrarprodukten aller Art.

Weitere Verwendungen sind Wurzelverpackungen von Pflanzen, Bäumen, Blumen und dergleichen.

Breite Verwendungsmöglichkeiten haben erfindungsgemässe Fasern, da durch entsprechende Varia‑tionen der Mengenanteile an Komponenten (A) und (B) erfindungsgemässe Fasern besondere Eigenschaf‑ten besitzen. Bei geringem Stärkeanteil [Komponente A)] und hohem Polymeranteil [Komponente (B)] werden wasserfeste Fasern erhalten, bei denen der Nachteil der synthetischen Textilfasern in bezug auf die geringe Feuchtigkeitsaufnahme beseitigt wurde und ein Tragekomfort entsprechend Baumwollgeweben erzielt wird. Es ist somit erstmalig möglich, eine günstige und umweltfreundliche Modifizierungskomponente einzusetzen, mit deren Hilfe die Feuchtigkeitsregulierung von Synthesefasern eingestellt werden kann und die zu konventionellen Faserpolymeren ausreichend verträglich ist.

Aufgrund der hohen Dichte von Komponente (A) besitzen erfindungsgemässe Fasern je nach Mengen‑anteil von Komponente (A) ein höheres Gewicht und bieten dort Vorteile, wo schwere Fasern benötigt werden, wie z.B. bei Teppichen.

Besonders vorteilhaft ist die Verwendung erfindungsgemässer Fasern im Bereich von Zigarettenfiltern, da hier biologisch schnell abbaubare Fasern besonders nützlich sind. Ferner können erfindungsgemässe biologisch abbaubare Fasern in den Bereichen Hygienevliese, Gewebe, OP‑Textilien, Windeln, Watte und Wundversorgungsmaterialien verwendet werden.

Durch den Anteil an Komponente (A) können die Eigenschaften von resorbierbaren Materialien [Komponente (B)] wie Polyhydroxybuttersäure, Polyhydroxyvaleriansäure sowie deren Copolymere und Blends oder Polylactide und Polyglykolide sowie deren Copolymere und Blends modifiziert werden und zu resorbierbaren erfindungsgemässen Fäden und Geweben verarbeitet werden.

Durch den Anteil an Komponente (A) sind erfindungsgemässe Fasern aus Komponente (A) und (B) antistatisch. Damit ist ein weiterer Nachteil von Synthesefasern eliminiert. Ferner dient restwasserhaltige Komponente (A) zur Flammfestausrüstung und reduziert Abtropfprobleme bei synthetischen Fasern ähnlich wie Metallhydroxydausrüstungen in Kunststoffen.

Erfindungsgemässe Fasern werden zur Herstellung von heisswasserzerstörbaren Trenngarnen bzw. ‑fasern, ‑geweben, ‑gewirken und ‑vliesen verwendet. Erfindungsgemässe Fasern finden auch als temporäre oder permanente Klebefasern bzw. ‑garnen, ‑geweben, ‑gewirken, ‑vliesen und ‑filzen Verwendung, je nach Wasserlöslichkeit. Hierbei können temporäre Verklebungen, z.B. in Vliesen, durch Dampfbehandlung wieder getrennt werden. Es sind somit recyclierbare Verbundvliese aus verschiedenen Materialien herstellbar.

Bei erfindungsgemässer Verwendung als Klebefasern zur Herstellung von permanenten Klebeverbin‑dungen diese Fasern mit Reaktivsystemen wie Isocyanate, verkappte Isocyanate, Formaldehyde, Epoxide, verkappte Epoxide, Anhydride und ester‑, amid‑ und carbamat‑bildende Zusätzen ausgerüstet werden und sofort oder nachträglich duroplastisch vernetzt werden.

Weiterhin können erfindungsgemässe Fasern in der Faserverbundtechnik als heisswasserlösliche Trenngewebesschicht verwendet werden, um verschiedene Fasermaterialien getrennt zu halten, damit später nach der Trennung durch Heisswasserbehandlung zwecks Wiederverwertung sortenrein recycliert werden kann.

Gemäss dem Stand der Technik werden Synthesefasern zur Papierverstärkung und zur Papierverede‑lung, wie Nassfestausrüstung, eingesetzt, mit dem Nachteil, dass diese Fasern bei der Papierentsorgung als biologisch nicht abbaubarer Teil zurückbleiben. Die Verwendung der erfindungsgemässen Fasern erlaubt es nun, verstärkte oder veredelte Papiere biologisch vollständig abbaubar herzustellen, wobei Komponente (B) der erfindungsgemässen Faser nach oben beschriebenem Trennverfahren nach der Pulverisierung abge‑trennt und der Wiederverwertung gegeführt werden kann.

Papiere mit erhöhtem Stärkefaseranteil, eignen sich besonders gut als Releasepapiere, Isolationsmate‑rialien sowie für Papiere mit verbesserten Gleiteigenschaften und verbesserter Bedruckbarkeit, insbeson‑dere auch für den Einsatz in Fotokopiergeräten.

Stärkemodifizierte Papierverstärkungsfasern zerfallen beim Papierrecycling in den wasserlöslichen Stärkeanteil, der in der Pulpe verbleibt, und in einem pulverartigen Polymeranteil, der als nicht wasserlösli‑

cher Anteil bei höherer Dichte als Wasser absinkt und zur Wiederverwertung vom Pulp abgetrennt werden kann.

Eine besonders bevorzugte Verwendung erfindungsgemässer Stärkefasern ist die Herstellung von biologisch abbaubaren Filtern, insbesondere Zigarettenfiltern oder Hygienevliesen und die Herstellung von biologisch abbaubaren Textilgeweben für den einmaligen Gebrauch. Bevorzugt ist auch die Herstellung von Luft–, Öl– und Staubsaugerfiltern.

Heissdampf– oder heisswasserzerstörbare erfindungsgemässe Fasern eignen sich zur Herstellung von Verbundvliesen, Verbundgeweben oder Maschenwaren, die aus verschiedenen Materialien bestehen und nach der Zerstörung der Bindefasern sortenrein wiederverwertet werden können. Diese umweltschonend zerstörbaren Fasern eignen sich insbesondere zur Herstellung von Faserverbundwerkstoffen, wo wieder entfernbare Konstruktionshilfsmittel nötig sind, oder wo entfernbare Trenngewebe, z.B. zwischen einzelnen Faserlagen, vorteilhaft sind. Besonders bevorzugt werden Klebefasern, die in temporären Verbunden die Festigkeit erhöhen und nach dem Gebrauch wieder umweltschonend gelöst werden können.

Der besondere Vorteil erfindungsgemässer heisswasserzerstörbarer Fasern liegt darin, dass fast alle Synthesefasern in Wasser unlöslich sind und nach dem Zerstören der als Bindefasern verwendete erfindungsgemässe Faser in ihrer Form erhalten bleiben und dass der Stärkeanteil [Komponente (A)] aufgelöst wird, biologisch abgebaut werden kann und dass der Polymeranteil der Bindefaser [Komponente (B)] in Pulver zerfällt und einer Wiederverwendung zugeführt werden kann.

Die erfindungsgemässen Fasern sind aufgrund ihres Stärkeanteils antistatisch und flammhemmend. Von Vorteil sind bei speziellen Anwendungen, wie z.B. bei Teppichen ihre höheren Dichten.

Erfindungsgemässe poröse Fasern oder Hohlfasern können als besonders leichte Isoliermaterialien eingesetzt werden. Die poröse Faser ist wegen der rauhen Oberfläche besonders für die Vernadelung zu Vliesen und Geweben geeignet. Weiterhin sind diese erfindungsgemässen Fasern mit erheblich vergrösserten Oberflächen zur Herstellung von saugfähigen Vliesen, insbesondere für Windeln, Watte, Putzwolle oder für Filtermaterialien mit hoher Absorption einsetzbar, wobei die Wirkungsweise ausschliesslich auf physikalischen Prozessen beruht.

Erfindungsgemässe Stärkefasern, deren Komponente (B) aus resorbierbaren Polymeren wie Polyhydroxybuttersäure (PHB), Polyhydroxyvaleriansäure (PHV), Polylactiden, Polyglykoliden besteht, können als chirurgisches Nähmaterial verwendet werden.

Für die Nachbehandlung der erfindungsgemässen Fasern bestehen folgende Möglichkeiten:

a) physikalische Nachbehandlung: Kräuselung,

b) chemische Nachbehandlung: sämtliche bekannten chemischen Nachbehandlungs– und Veredelungsverfahren, wie z.B. diejenigen, die bei der Papierveredelung als auch bei der Cellulosebehandlung eingesetzt werden.

Zur Herstellung von Schaumfasern kann eine alternative Behandlungsmöglichkeit darin bestehen, dass man bereits der Schmelzespinnmasse an sich für Schaumfasern bekannte Treibmittel bzw. Substanzen zusetzt, die Gase entwickeln.

Besonders bevorzugte Eigenschaften erfindungsgemässer Fasern sind:

a) schnelle biologische Abbaubarkeit,

b) erhöhte Dichte, antistatische Eigenschaften, je nach Art der verwendeten schmelzespinnbaren Stärkeformmasse [Komponente (A)] und/oder Mengenanteile von Komponente (A) und (B) Wasserlöslichkeit oder Nassfestigkeit,

c) thermische Isolierwirkung von Hohlfasern,

d) bei porösen Fasern/Hohlfasern Saugfähigkeit/Feuchtigkeitsaufnahme,

e) geringe Dichte bei porösen Fasern,

f) Resorbierbarkeit,

g) Release–Eigenschaften,

h) Feuchtigkeitsdurchlässigkeit und Feuchtigkeitsaufnahme.

Die folgenden Beispiele erläutern die Erfindung ohne sie zu beschränken.

## Beispiele

I. Herstellung der schmelzspinnbaren Stärkeformmasse (Komponente (A))

Beispiel 1

Nach dem im folgenden beschriebenen Verfahren wurden aus 70 Gew.–Teilen Hydroxypropylmaisstärke mit einem Substitutionsgrad von 0,06 und einem Amylosegehalt von 50 Gew.–% sowie 15 Gew.–

Teilen Glycerol, 12,8 Gew. − Teilen Sorbitol, 2 Gew. − Teilen Harnstoff und 0,2 Gew. − Teilen Magnesiums − tearat eine Stärkeformmasse hergestellt, die anschliessend granuliert wurde.

Extrudereinstelldaten:

| a) Heizzone: | (1) Raumtemperatur |
| | (2) 130°C |
| | (3) 130°C |
| | (4) 100°C |
| | (5) 100°C |
| | (6) 150°C |
| b) Druck: | Zone (6) (30 − 40 bar) $3 \times 10^6$ − $4 \times 10^1$ Pa |
| c) Drehmoment: | 70 % |
| d) Unterdruck: | (− 0,4 bar) − $4 \times 10^4$ Pa. |

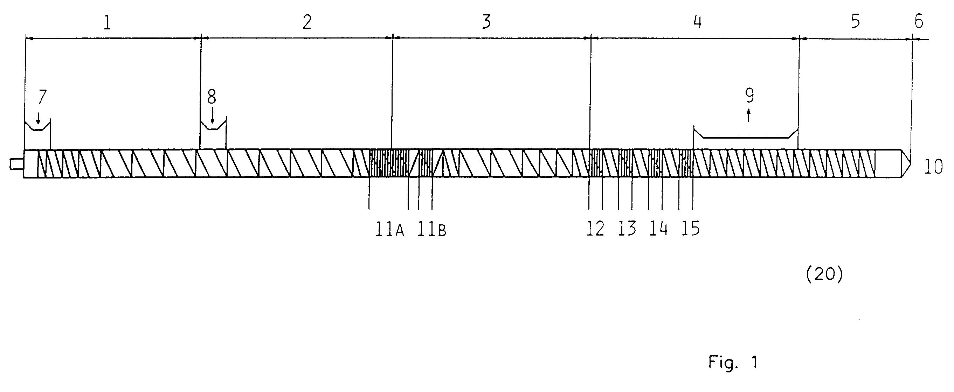

In den Einzugsbereich (Heizzone 1) eines gleichlaufenden, dichtkämmenden Doppelwellenextruders mit einer Schneckengeometrie gemäss Fig. 1 und einem Schneckenlängen − Durchmesserverhältnis von 41 wurden 70 Gew. − % Hydroxypropyl − Maisstärke mit einem Substitutionsgrad von 0,06 und einem Amylo − segehalt von 50 Gew. − % und 12,8 Gew. − % Sorbitol an der Stelle 7 von Fig. 1 separat eindosiert, im Extruder gleichzeitig vermischt und gefördert. 0,2 Gew. − % Magnesiumstearat wurden mit 2 Gew. − % Harnstoff bei 60°C in 15 Gew. − % Glycerol gelöst. Diese vorhomogenisierte Weichmacher − Emulgator − Additiv − Mischung wurde an der Stelle 8 von Fig. 1 in den Extruder (Heizzone 2) eindosiert, dann im Extruder gleichzeitig vermischt und weitergefördert. Nach dem Aufschliessen der Stärkekörner und voll − ständigem Plastifizieren der Stärkemischung in der Knetkammer 11 (Heizzone 2 und 3) zu einer homoge − nen Schmelze, wurde die Stärkeschmelze durch Anlegen eines Unterdrucks an der Stelle 9 von Fig. 1 (Heizzone 4) entgast. Nach Durchlaufen der Heizzone (5) wurde die homogene, thermoplastisch verarbeit − bare Stärkeschmelze in Heizzone (6) durch eine Düse als Strang mit geringer Strangaufweitung (Düse: 3 mm, Strang: 4 mm) extrudiert, abgekühlt und granuliert.

Figur 1 zeigt einen Doppelwellenextruder.

Die Nummern (1) bis (6) kennzeichnen die Heizzonen eines beispielhaften Doppelwellenextruders (20), (7) kennzeichnet die Eingabeöffnung in den Einzugsbereich, die mit zwei Feststoffdosiervorrichtungen bestückt sein kann, (8) eine zweite Zugabeöffnung für die Flüssigkeitsdosiervorrichtung, (9) die Extruder − öffnung für den Entgasungsstutzen, (10) eine beliebige Düse, (11a) und (11b) eine zweistufige Knetkammer, (12) bis (15) weitere Knetzonen zur eventuellen Einarbeitung von dem Stand der Technik entsprechenden Additiven.

## II. Herstellung der die Faserkomponenten (A) und (B) enthaltende Schmelzespinnmasse

### Beispiele 2 bis 32

Das Stärkeformmassengranulat von Beispiel 1) wurde mit dem Granulat des ausgewählten Synthese − fasermaterials [Komponente (B)] vermischt und in die Dosierzone eines Doppelwellenextruders ZSK − 30 (Fa. Werner & Pfleiderer) mit 6 Heizzonen eindosiert. Drehzahl und Durchsatz betrugen 100 UPM bzw. 8 bis 10 kg/h.

Typ, Schmelztemperatur, Schmelzviskosität und Gewichtsanteil des Polymeren [Komponente (B)], Stärkeformmassentyp [Komponente (A)] und Extrusionstemperaturen sind in Tabelle 1 zusammengefasst. Die Materialeigenschaften und die Farbqualität der resultierenden Schmelzespinnmasse sind Tabelle 2 zu entnehmen.

Die Scbmelzviskositäten der Synthesefasermaterialien [Komponente (B)] wurden nach DIN 53 735 bei 160°C und 21,2 N ermittelt. Die Schmelzviskositäten der Schmelzespinnmassen wurden mittels einer modifizierter Melt − Flow − Index − Methode bei 160°C und 236,4 N gemessen. Der Wassergehalt wurde nach Karl Fischer gemäss DIN 53 714, der Schmelzpunkt differentialkalorimetrisch im trockenen Zustand mit einer Aufheizrate von 20°C/min in einem Du Pont Thermal Analyzer − Gerät Typ 1091B bestimmt.

**Herstellung der erfindungsgemässen Fasern**

Beispiel 33 bis 43

Ausgewählte Scbmelzespinnmassen aus den Beispielen 1 bis 32 wurden gemäss Tabelle 3 auf verschiedene Wassergehalte eingestellt und auf einer Kompakt – Schmelzspinnstreckanlage zu Filamenten verarbeitet.

Die Spinn – Anlage war u.a. mit einem BARMAG – Extruder 2E4 (Schneckengrösse D25/24D), einer Zahnrad – Spinnpumpe und einem elektrisch beheizten Spinnblock ausgerüstet. Zum Spinnen wurde ein Düsenpaket verwendet, welches für hochviskose Schmelzmassen ausgelegt ist und eine spezielle Druck – platte und Verteilerplatte sowie eine Düsenplatte mit 68 Loch des Düsendurchmessers 0,35 mm enthält.

Die aus der Düsenplatte austretenden Spinnfäden wurden in einem Wasserbad von 20 – 23 ˚C abgekühlt, über 3 beheizte Galettenduos abgezogen und verstreckt, dann über ein unbeheiztes viertes Duo zum Wickler geführt.

In Beispiel Nr. 43 wurde anstelle von Wasser ein Fettsäureester (Mold – Wiz) zum Abkühlen der Spinnfäden eingesetzt.

Im Beispiel Nr. 44 wurden Monofilamente aus der Schmelzespinnmasse von Beispiel Nr. 26 hergestellt. Dazu wurde der Durchsatz erhöht, eine Spinndüsenplatte mit 6 Loch, Spinndüsendurchmesser 0,80 mm eingesetzt, die Elementarfäden getrennt über die Streckaggregate geführt und einzeln aufgespult.

Es resultierten Monofilamente mit einem Durchmesser von 0,27 – 0,28 mm, einer Reissfestigkeit von 1,2 cN/dtex und einer Bruchdehnung von 37 %.

Beispiel Nr. 45

Hier wurde die Schmelzespinnmasse aus Beispiel 24 zum Schnellspinnen eingesetzt. Das Granulat mit einem Wassergehalt von 1,4 % wurde in einem BARMAG 3E8 – Extruder (Schneckengrösse D30/30D) aufgeschmolzen, bei einer Spinntemperatur von 146˚C durch ein Düsenpaket mit einer Spinndüsenplatte mit 34 Loch des Düsendurchmessers 0,35 mm gedrückt, die resultierenden Fäden mit einem Querstrom von Luft abgekühlt, mit Spinnpräparation geölt, über eine Galette mit Beilaufrolle mit einer Geschwindigkeit von 2520 m/Min abgezogen, verwirbelt und mit 250 m/Min aufgespult. Das resultierende Multifilament des Titers dtex 190/34 zeigte eine Reissfestigkeit von 1,4 cN/dtex bei einer Bruchdehnung von 46 %. Dieses Multifilament ist zum Strecktexturieren zu Texturgarn geeignet.

Beispiel Nr. 46

Dieselbe Schmelzespinnmasse aus Beispiel Nr. 24 wurde hier zum Spinnstrecken eingesetzt. Gespon – nen, abgekühlt und geölt wurde ähnlich wie in Beispiel Nr. 45. Die Spinnfäden wurden dann über 5 Galetten mit Verlegerollen geführt, die mit folgenden Geschwindigkeiten und Temperaturen liefen:
1625 m/Min/unbeheizt; 1650 m/Min/55˚C; 2600 m/Min/60˚C;
2750 m/Min/65˚C und 2700 m/Min/27˚C.
Der spinngestreckte Faden wurde mit 2600 m/Min aufgespult. Er zeigte einen Titer von dtex 170f34, eine Reissfestigkeit von 1,6 cN/dtex und eine Bruchdehnung von 25,5 %.

Beispiel Nr. 47

Das Multifilament aus dem Beispiel Nr. 40 wurde bei einer Geschwindigkeit von 120 m/Min zu einem Gesamttiter von 2000 Tex gefacht, durch eine Stauchkammer geführt und damit gekräuselt, dann kontinu – ierlich in einem Plattenbandtrockner bei 70˚C getrocknet und in einer FLEISSNER – Schneidmaschine auf eine Länge von 80 mm geschnitten.

Diese Stapelfasern des Titers 30 dtex zeigten eine Reissfestigkeit von 1,4 cN/dtex und eine Bruchdeh – nung von 27 %.

Dieses Beispiel zeigt, dass erfindungsgemässe Schmelzespinnmassen in einer Kompaktspinnstreckan – lage einstufig zu Stapelfasern verarbeitet werden können.

Beispiel Nr. 48

Die Schmelzespinnmasse aus Beispiel Nr. 24 wurde hier nach dem zweistufigen Spinn – und Streck – verfahren zu Stapelfasern verarbeitet. Das Granulat aus Beispiel Nr. 24 wurde in einem BARMAG 6E4 –

Extruder aufgeschmolzen, mit einer Fördermenge von 877 g/Min durch ein Spinndüsenpaket mit einer Spinndüsenplatte des Durchmessers 210 mm mit 645 Loch des Düsendurchmessers 0,40 mm gedrückt, die Spinnfäden mit einer Querstromanblasung mit Luft abgekühlt, mit einer Spinnpräparation versehen, über 4 Galetten in offener Umschlingung der Kannenablage zugeführt und das Spinnfaserkabel hier mit einer Geschwindigkeit von 680 m/Min in Kannen abgelegt. Der Titer des Spinnkabels beträgt Tex 1290f645.

Aus 3 dieser Kannen wurde das Spinnfaserkabel gleichzeitig abgezogen und zusammen durch einen Netztrog mit 0,5 %iger Avivage geleitet, dann über 3 Streckenwerke mit jeweils 2 Galetten bei Geschwin – digkeiten und Temperaturen von 56,0 m/Min/58˚C; 103 m/Min/60˚C und 100,5 m/Min/unbeheizt geführt, dann durch eine Aviviervorrichtung mit 3 %iger Avivage befeuchtet, in einem Crimper (Stauchkräuselkammer) gekräuselt, in einem Plattenbandtrockner bei 70˚C getrocknet und in einer Faser – schneidmaschine auf eine Faserlänge von 80mm geschnitten.

Die resultierende gekräuselte Stapelfaser hat einen Einzeltiter von 11,0 dtex, eine Reissfestigkeit von 1,5 cN/dtex und eine Bruchdehnung von 31,5 %.

Beispiel Nr. 49

Fasern aus 100% Komponente (A), d.h. ohne Polymeranteil [ = Komponente (B)]:
Nach dem in Beispiel Nr. 1 beschriebenen Verfahren wurde aus 70 Gew. – Teilen Hydroxypropylmaisstärke mit einem Substitutionsgrad von 0,06 und einem Amylosegehalt von 85 Gew. – %, 15 Gew. – Teilen Glycerol, 13 Gew. – Teilen Sorbitol, 2 Gew. – Teilen Harnstoff und 5 Gew. – Teilen des Verarbeitungshilfs – mittels Paraloid K125/K175 3:2 eine scbmelzespinnbare Stärkeformmasse hergestellt, die anschliessend granuliert wurde.

Diese Schmelzespinnmasse mit einem Wassergehalt von 7,7 Gew. – % wurde gemäss Beispiel Nr. 44 bei einer Spinntemperatur von 135˚C an einer Spinnanlage – wie bereits für die Beispiele Nr. 33 bis 43 beschrieben – nun jedoch wie im Beispiel Nr. 44 ausgerüstet, mit einer Spinndüsenplatte mit 6 Loch, Spinndüsendurchmesser 0,8 mm – gesponnen und zwecks Abkühlung mit Luft angeblasen. Die Elemen – tarfäden wurden getrennt über die Streckaggregate geführt und einzeln aufgespult.

Bei Galettentemperaturen von 50/55/55/25˚C, einem Streckverhältnis von 1:1,79 und einer Aufspulge – schwindigkeit von 15,3 m/min resultierten Monofile des Durchmessers 0,40 mm, einer Reissfestigkeit von 0,24 cN/dtex und einer Bruchdehnung von 85%.

Tabelle 1: Herstellungsparameter für die die Faserkomponenten (A) und (B) enthaltende Schmelzepinnmasse

| Bei-spiel | Komponente (B) | | | | Anteil Kompo-nente (A) (Beisp.1) | T 1 (°C) | T 2 (°C) | T 3 (°C) | T 4 (°C) | T 5 (°C) | Tsch[3] (°C) |
|---|---|---|---|---|---|---|---|---|---|---|---|
| | Typ | Schmp.[1] (°C) | Schmelz-viskosität[2] 21,2 N 160°C/Pa.s | Anteil (Gew.-Teile) | | | | | | | |
| 2 | Grilon CF 62 BSE | 136 | 3100 | 50 | 50 | 0 | 140 | 145 | 145 | 145 | 167 |
| 3 | Grilon CF 62 BSE | 136 | 3100 | 40 | 60 | 0 | 140 | 145 | 145 | 145 | 163 |
| 4 | Grilon CF 62 BSE | 136 | 3100 | 30 | 70 | 0 | 140 | 145 | 145 | 145 | 161 |
| 5 | Grilon CF 62 BSE | 136 | 3100 | 20 | 80 | 0 | 140 | 145 | 145 | 145 | 157 |
| 6 | Grilon CF 62 BSE | 136 | 3100 | 10 | 90 | 0 | 140 | 145 | 145 | 145 | 165 |
| 7 | Grilon CR 9 | 200 | -- | 50 | 50 | 0 | 210 | 230 | 230 | 230 | 235 |
| 8 | Grilon CA 6 A | 130 | 3600 | 50 | 50 | 0 | 140 | 140 | 140 | 140 | 165 |
| 9 | Grilamid ELY 60 | 160 | -- | 50 | 50 | 0 | 150 | 170 | 150 | 150 | 179 |
| 10 | Grilamid ELY 60 | 160 | -- | 30 | 70 | 0 | 150 | 170 | 150 | 150 | 180 |
| 11 | Grilamid ELY 60 | 160 | -- | 10 | 90 | 0 | 150 | 170 | 150 | 150 | 178 |
| 12 | Grilamid ELY 60 | 160 | -- | 5 | 95 | 0 | 150 | 170 | 150 | 150 | 179 |
| 13 | Griltex 1 | 110 | 600 | 50 | 50 | 0 | 150 | 150 | 130 | 130 | 151 |
| 14 | Griltex 1 | 110 | 600 | 40 | 60 | 0 | 150 | 150 | 130 | 130 | 145 |
| 15 | Griltex 1 | 110 | 600 | 30 | 70 | 0 | 150 | 150 | 130 | 130 | 147 |
| 16 | Griltex 1 | 110 | 600 | 20 | 80 | 0 | 150 | 150 | 130 | 130 | 149 |
| 17 | Griltex 1 | 110 | 600 | 50 | 50 | 0 | 150 | 150 | 130 | 130 | 147 |
| 18 | Griltex 1 | 110 | 600 | 10 | 90 | 0 | 150 | 150 | 130 | 130 | 153 |
| 19 | Griltex 1 | 110 | 600 | 5 | 95 | 0 | 150 | 150 | 130 | 130 | 153 |
| 20 | Griltex 2 | 125 | 400 | 50 | 50 | 0 | 150 | 150 | 130 | 130 | 150 |
| 21 | Griltex 2 | 125 | 400 | 20 | 80 | 0 | 150 | 150 | 130 | 130 | 153 |
| 22 | Griltex 3 | 110 | 500 | 50 | 50 | 0 | 150 | 150 | 130 | 130 | 143 |
| 23 | Griltex 4 | 110 | 100 | 50 | 50 | 0 | 150 | 150 | 130 | 130 | 143 |
| 24 | Griltex 5 | 80 | 150 | 50 | 50 | 0 | 120 | 100 | 105 | 100 | 125 |
| 25 | Griltex 5 | 80 | 150 | 80 | 20 | 0 | 100 | 100 | 110 | 120 | 126 |
| 26 | Griltex 5 | 80 | 150 | 60 | 40 | 0 | 100 | 100 | 110 | 120 | 130 |
| 31 | Griltex 5 | 80 | 150 | 40 | 60 | 0 | 100 | 100 | 110 | 120 | 128 |
| 32 | Griltex 5 | 80 | 150 | 30 | 70 | 0 | 100 | 100 | 110 | 120 | 131 |
| 27 | Capa 650 | 60 | 450 | 50 | 50 | 0 | 100 | 130 | 100 | 100 | 123 |
| 28 | Capa 650 | 60 | 450 | 30 | 70 | | 150 | 170 | 150 | 150 | 164 |
| 29 | Capa 650 | 60 | 450 | 10 | 90 | 0 | 150 | 170 | 150 | 150 | 165 |
| 30 | Capa 650 | 60 | 450 | 5 | 95 | 0 | 150 | 170 | 150 | 150 | 165 |

1) Schmelzpunkt gemäss DSC
2) Schmelzviskosität bei 160°C und 21,2 N nach DIN 53 735
3) Tsch. = Temperatur der Schmelze

Tabelle 2: Materialeigenschaften der Schmelzespinnmasse, die Faserkomponenten (A) und (B) enthaltend

| Bei-spiel | Wasser[1] (Gew.-%) | Schmp.[2] (°C) | Schmelz-viskosi-tät[3] (Pa·s) | E-Modul[4] (N/mm²) | Reiss-festig-keit [5] (N/mm²) | Reiss-dehnung (%)[6] | Kalt-wasser Quel-lung(%) | Heiss-auf-lösung | Trans-parenz | Far-be |
|---|---|---|---|---|---|---|---|---|---|---|
| 2a | 11,60 | -.- | 259 | 78 | 10,5 | 434 | max. 10 | ja | nein | + |
| 2b | 4,40 | 107 | 1867 | 254 | 21,1 | 404 | max. 10 | ja | nein | + |
| 3 | 2,20 | 111 | 4508 | 499 | 17,5 | 221 | max. 10 | ja | nein | + |
| 4 | 1,80 | 115 | 6500 | 1038 | 26,6 | 4 | max. 10 | ja | nein | + |
| 5 | 1,60 | 113 | 8000 | 1393 | 30,4 | 3 | Auflösung | ja | nein | o |
| 6 | -.- | -.- | -.- | -.- | -.- | -.- | Auflösung | ja | nein | o |
| 13 | 5,5 | 143 | 215 | 117 | 14,6 | 434 | max. 10 | ja | gut | + |
| 14 | 7,65 | 145 | 255 | 71 | 13,0 | 520 | max. 10 | ja | gut | ++ |
| 15 | 7,57 | 147 | 275 | 110 | 9,6 | 355 | max. 10 | ja | sehr gut | ++ |
| 16 | 8,11 | 149 | 271 | 89 | 6,4 | 220 | Auflösung | ja | sehr gut | ++ |
| 17 | 5,59 | 147 | 263 | | | | max. 10 | ja | gut | ++ |
| 18 | 4,60 | 165 | 2840 | 190 | 9,3 | 64 | Auflösung | ja | sehr gut | ++ |
| 19 | 4,43 | 163 | 3575 | 160 | 8,2 | 66 | Auflösung | ja | gut | o |
| 20 | 7,60 | 146 | 265 | 75 | 14,0 | 510 | max. 10 | ja | sehr gut | ++ |
| 21 | 8,05 | 148 | 283 | 92 | 7,5 | 210 | Auflösung | ja | gut | ++ |
| 22 | | | | | | | max. 10 | ja | gut | ++ |
| 23 | | | | | | | max. 10 | ja | nein | ++ |
| 24 | | | | | | | max. 10 | ja | nein | ++ |
| 25 | 3,10 | | | | | | max. 10 | nein | nein | ++ |
| 26 | 3,30 | | | | | | max. 10 | nein | nein | ++ |
| 27 | 5,10 | 57 | 303 | 222 | 3,4 | 400 | max. 10 | ja | nein | ++ |
| 28 | 8,10 | 58 | 152 | 142 | 6,1 | 77 | Auflösung | ja | nein | ++ |
| 29 | 3,50 | 163 | 5299 | 330 | 10,3 | 18 | Auflösung | ja | nein | ++ |
| 30 | 3,90 | 161 | 5772 | 270 | n.g. | n.g. | Auflösung | ja | nein | ++ |

1) Endwassergehalt nach DIN 53 714
2) Schmelzpunkt nach DSC
3) Schmelzviskosität nach EMS, bei 160°C und 236,4 N
4) Zug-E-Modul nach DIN 53 457
5,6) nach DIN 53 455

EP 0 541 050 A2

Tabelle 3: Herstellungsparameter und Prüfdaten der erfindungsgemässen Fasern

| Fila-ment-Bei-spiel Nr. | Schmelz-spinn-masse Bei-spiel Nr. | Wasser-gehalt % | Spinn-tempe-ratur °C | Galettentem-peraturen °C | Gesamt-streck-ver-hältnis 1: | Spul-ge-schwin-dig-keit m/Min. | Filamentdaten | | |
|---|---|---|---|---|---|---|---|---|---|
| | | | | | | | Titer dtex | Reiss-festig-keit cN/dtex | Bruch-dehnung % |
| 33 | 3 | 2.3 | 140 | 62/63/64/24 | 3.22 | 116 | 3710 | 0.6 | 32.5 |
| 34 | 8 | 1.8 | 158 | 74/75/105/25 | 3.55 | 160 | 2700 | 1.0 | 29.4 |
| 35 | 15 | 2.2 | 152 | 68/68/90/24 | 3.25 | 240 | 1790 | 0.8 | 24.2 |
| 36 | 20 | 2.5 | 148 | 60/62/70/22 | 4.50 | 200 | 2150 | 1.3 | 31.5 |
| 37 | 25 | 2.1 | 143 | 60/62/65/23 | 5.50 | 215 | 2000 | 2.2 | 57.2 |
| 38 | 26 | 1.4 | 137 | 59/62/64/23 | 5.30 | 215 | 2000 | 1.5 | 40.1 |
| 39 | 24 | 1.4 | 137 | 61/60/65/23 | 5.10 | 215 | 2000 | 1.4 | 29.8 |
| 40 | 31 | 2.3 | 136 | 60/60/65/22 | 4.88 | 215 | 2000 | 1.2 | 24.5 |
| 41 | 32 | 2.2 | 138 | 60/61/65/22 | 3.50 | 160 | 2680 | 0.7 | 26.1 |
| 42 | 28 | 1.4 | 116 | 22/23/24/22 | 4.25 | 180 | 2430 | 0.9 | 22.0 |
| 43 | 1 | 6.0 | 138 | 50/54/55/23 | 2.40 | 120 | 3800 | 0.5 | 16.0 |
| 44 | 26 | 1.4 | 136 | 60/63/63/23 | 5.50 | 116 | 883 | 1.3 | 33.5 |

In den Beispielen wurden folgende Markenprodukte verwendet;

- Grilon 6F 62 BSE ist ein Copolyamid auf Basis der Monomeren PA 6 und PA 6.9 der Firma EMS-CHEMIE mit einem Schmelzpunkt von ca. 136°C
- Grilon CR 9 ist ein Copolyamid auf Basis der Monomeren von PA 6 und PA 12 der Firma EMS-CHEMIE mit einem Schmelzpunkt von ca. 200°C

– Grilon CA 6E ist ein Copolyamid auf Basis der Monomeren von PA 6 und PA 12 der Firma EMS – CHEMIE mit einem Schmelzpunkt von ca. 130˚C

– Grilamid ELY 60 ist ein Copolyamid der Firma EMS – CHEMIE auf Basis von Lactam 12, Polyether – diamin und dimerisierter Fettsäure mit einem Schmelzpunkt von ca. 160˚C

– Griltex 1 ist ein Copolyamid der Fa. EMS – CHEMIE auf Basis der Monomeren von PA 6 und PA 6.6 mit einem Schmelzpunkt von ca. 110˚C und einer Schmelzviskosität (DIN 53 735) von ca. 600 Pa.s (21.2 N/160˚C)

– Griltex 2 ist ein Copolyamid der Fa. EMS – CHEMIE auf Basis der Monomeren von PA 6, PA 12 und PA 6.6 mit einem Schmelzpunkt von ca. 125˚C und einer Schmelzviskosität (DIN 53 735) von ca. 400 Pa.s (21.2/160˚C)

– Griltex 3 ist ein Copolyamid der Fa. EMS – CHEMIE auf Basis der Monomeren von PA 6, PA 12 und PA 6.6 mit einem Schmelzpunkt von ca. 110˚C und einer Schmelzviskosität (DIN 53 735) von ca. 500 Pa.s (21.2 N / 160˚C)

– Griltex 4 ist ein Copolyamid der Fa. EMS – CHEMIE auf Basis der Monomeren von PA 6, PA 12 und PA 6.6 mit einem Schmelzpunkt von ca. 110˚C und einer Schmelzviskosität (DIN 53 735) von ca. 100 Pa.s (21.2 N / 160˚C)

– Griltex 5 ist ein Copolyamid der Fa. EMS – CHEMIE auf Basis der Monomeren von PA 6, PA 12, PA 6.6, PA 6.9 und PA 11 mit einem Schmelzpunkt von ca. 80˚C und einer Schmelzviskosität (DIN 53 735) von ca. 150 Pa.s (21.2 / 160˚C)

– CAPA 650 ist ein Polycaprolacton von der Fa. Interrox

## Patentansprüche

1. Stärkefaser, dadurch gekennzeichnet, dass sie nach dem Schmelzespinnverfahren hergestellt ist, und aus folgenden Komponenten besteht:

(A) 1 bis 100 Gew. – Teilen mindestens einer schmelzespinnbaren Stärkeformmasse aus:

(i) 96 bis 56 Gew. – Teilen mindestens einer modifizierten und/oder nicht modifizierten Stärke,

(ii) 4 bis 40 Gew. – Teilen mindestens einem auf diesem Gebiet üblichen Weichmacher und/oder eines Destrukturierungsmittels,

(iii) 0 bis 4 Gew. – Teilen mindestens eines Additivs ausgewählt aus der Gruppe, die Harnstoff, Harnstoffderivate, Emulgatoren, Proteine und deren Alkalisalze, und Gleitmittel umfasst

wobei sich die Gew. – Teile der Komponenten (i), (ii) und (iii) auf 100 ergänzen, und

(B) 99 bis 0 Gew. – Teilen mindestens eines ausgewählten schmelzspinnbaren Polymeren,

wobei sich die Gew. – Teile der Komponenten (A) und (B) auf 100 ergänzen,

sowie gegebenenfalls zusätzlich

(C) 0 bis 20 Gew. – Teilen dem Stand der Technik entsprechenden üblichen Zusatzstoffen für Schmelzespinnmassen.

2. Stärkefaser gemäss Anspruch 1, dadurch gekennzeichnet, dass sie besteht aus:

(A) 10 bis 100 Gew. – Teilen, bevorzugt 30 bis 100 Gew. – Teilen, mindestens einer schmelzespinn – baren Stärkeformmasse aus:

(i) 90 bis 66 Gew. – Teilen mindestens einer modifizierten und/oder nicht – modifizierten Stärke,

(ii) 10 bis 30 Gew. – Teilen mindestens einem auf diesem Gebiet üblichen Weichmacher,

(iii) 0 bis 4 Gew. – Teilen mindestens eines Additivs, ausgewählt aus der Gruppe, die Harnstoff, Harnstoffderivate, Emulgatoren und Gleitmittel umfasst

wobei sich die Gew. – Teile der Komponenten (i), (ii) und (iii) auf 100 ergänzen, und

(B) 90 bis 0 Gew. – Teilen, bevorzugt 70 bis 0 Gew. – Teilen, mindestens eines ausgewählten schmelzespinnbaren Polymeren,

wobei sich die Gew. – Teile der Komponenten (A) und (B) auf 100 ergänzen,

sowie gegebenenfalls zusätzlich

(C) 0 bis 10 Gew. – Teilen dem Stand der Technik entsprechenden üblichen Zusatzstoffen für Schmelzespinnmassen.

3. Stärkefaser gemäss Anspruch 1, dadurch gekennzeichnet, dass sie die Komponente (A) in Mengen von 20 bis 95 Gew. – Teilen, bevorzugt 20 bis 80 Gew. – Teilen, besonders bevorzugt 50 bis 80 Gew. – Teilen, und die Komponente (B) in Mengen von 80 bis 5 Gew. – Teilen, bevorzugt 80 bis 20 Gew. – Teilen, besonders bevorzugt 50 bis 20 Gew. – Teilen, enthält.

**4.** Stärkefaser gemäss einem der Ansprüche 1 bis 3 dadurch gekennzeichnet, dass die Stärke (Komponente [(A)(i)]) einen natürlichen Wassergehalt von 5 bis 16 Gew. – %, bevorzugt 5 bis 12 Gew. – %, besonders bevorzugt 6 bis 8 Gew. – %, besitzt.

**5.** Stärkefaser gemäss einem der Ansprüche 1 bis 4, dadurch gekennzeichnet, dass die Stärke, (Komponente [(A)(i)] einen Amylosegehalt von 20 bis 100 Gew. – %, bevorzugt 50 bis 100 Gew. – %, besonders bevorzugt 65 bis 100 Gew. – %, besitzt.

**6.** Stärkefaser gemäss einem der Ansprüche 1 bis 5, dadurch gekennzeichnet, dass die modifizierte Stärke (Komponente [(A)(i)]) durch Umsetzung ihrer OH – Gruppen mit Alkylenoxiden oder anderen ether – , ester – , urethan – , carbamat – und/oder isocyanat – bildenden Stoffen modifiziert worden ist.

**7.** Stärkefaser gemäss Anspruch 6, dadurch gekennzeichnet, dass die chemisch modifizierte Stärke (Komponente [(A)(i)]) eine Hydroxy – $C_2$ bis $C_6$ – Alkyl – , Acetyl – oder Carbamatstärke oder deren Mischungen ist.

**8.** Stärkefaser gemäss Anspruch 6 oder 7, dadurch gekennzeichnet, dass die chemisch modifizierte Stärke (Komponente [(A)(i)]) einen Substitutionsgrad von 0,01 bis 3,0 bevorzugt 0,05 bis 2,0, besonders bevorzugt 0,05 bis 1,0, besitzt.

**9.** Stärkefaser gemäss einem der Ansprüche 6 bis 8, dadurch gekennzeichnet, dass die chemisch modifizierte Stärke (Komponente [(A)(i)]) Stärkeacetat ist und einen Substitutionsgrad von 2 bis 3, bevorzugt 2,25 bis 2,75, besitzt.

**10.** Stärkefaser gemäss Anspruch 1, dadurch gekennzeichnet, dass die Stärkeformmasse [Komponente (A)] den Weichmacher in Mengen von 9 bis 40 Gew. – Teilen, bevorzugt 10 bis 30 Gew. – Teilen, enthält.

**11.** Stärkefaser gemäss einem der Ansprüche 1 bis 10, dadurch gekennzeichnet, dass der Weichmacher (Komponente [(A)(ii)] mindestens eine organische Verbindung mit mindestens einer Hydroxylgruppe, bevorzugt Polyol, besonders bevorzugt Sorbitol, Mannitol, D – Glukose, Glycerol, Ethylenglykol, Poly – ethylenglykol, Propylenglykol oder deren Mischungen ist.

**12.** Stärkefaser gemäss einem der Ansprüche 1 bis 11, dadurch gekennzeichnet, dass das Additiv (Komponente [(A)(iii)]) 0,1 bis 2 Gew. – Teile Harnstoff und/oder Harnstoffderivate und/oder 0,1 bis 2 Gew. – Teile mindestens eines Emulgators ist.

**13.** Stärkefaser gemäss einem der Ansprüche 1 bis 12, dadurch gekennzeichnet, dass die Stärkeform – masse [Komponente (A)] den Emulgator in Mengen von 0,1 bis 1 Gew. – Teilen, bevorzugt 0,2 Gew. – Teilen, enthält.

**14.** Stärkefaser gemäss einem der Ansprüche 1 bis 13, dadurch gekennzeichnet, dass der Emulgator (Komponente [(A)(iii)])eine Verbindung mit einem Hydrophil – Lipophil – Balance – Wert (HLB – Wert) von 0 bis 20,0, bevorzugt 10,0 bis 20,0 ist, wobei Metallstearat und Glycerolmonostearat besonders bevorzugt sind.

**15.** Stärkefaser gemäss einem der Ansprüche 1 bis 14, dadurch gekennzeichnet, dass die Stärkeformasse [Komponente (A)] den Harnstoff und/oder die Harnstoffderivate in Mengen von 0,1 bis 2 Gew. – Teilen, bevorzugt 1 Gew. – Teil, enthält.

**16.** Stärkefaser gemäss einem der Ansprüche 1 bis 15, dadurch gekennzeichnet, dass das schmelzspinn – bare Polymere [Komponente (B)] einen Schmelz – oder Erweichungspunkt von 50 bis 220 ˚C besitzt.

**17.** Stärkefaser gemäss Anspruch 16, dadurch gekennzeichnet, dass das scbmelzspinnbare Polymere [Komponente (B)] einen Melt – Flow – Index (MFI) von 10 bis 10 000 Pa.s (bei 21.2 N und bei einer Temperatur von 30 ˚C über dem Schmelz – oder Erweichungspunkt) besitzt.

18. Stärkefaser gemäss den Ansprüchen 16 und 17, dadurch gekennzeichnet, dass das schmelzspinnbare Polymere [Komponente (B)] einen Schmelz− oder Erweichungspunkt von 50 bis 160˚C und einen Melt−Flow−Index (MFI) von 50 bis 8 000 Pa.s besitzt.

19. Stärkefaser gemäss den Ansprüchen 16 bis 18, dadurch gekennzeichnet, dass das schmelzespinnbare Polymere [Komponente (B)] ausgewählt ist aus der Gruppe, die Polyamide, Copolyamide und deren Mischungen umfasst.

20. Stärkefaser gemäss den Ansprüchen 16 bis 19, dadurch gekennzeichnet, dass das schmelzespinnbare Polymere [Komponente (B)] ausgewählt ist aus der Gruppe, die Polycaprolactone, Polyhydroxybutyrate, Polyhydroxyvaleriate, Polyester, und deren Mischungen, bevorzugt Polycaprolactone, umfasst.

21. Stärkefaser gemäss den Ansprüchen 16 bis 20, dadurch gekennzeichnet, dass das schmelzespinnbare Polymere [Komponente (B)] ausgewählt ist aus der Gruppe, die Polylactide, Polyglykolide, Polyether, Polyurethane, Polysiloxane, und deren Mischungen umfasst.

22. Stärkefaser gemäss den Ansprüchen 16 bis 21, dadurch gekennzeichnet, dass das schmelzespinnbare Polymere [Komponente (B)] selbst oder in homogenen Stärke−Polymer−Mischungen mindestens teilweise biologisch abbaubar ist.

23. Stärkefaser gemäss Anspruch 19, dadurch gekennzeichnet, dass das Polyamid ein Homo− und/oder Copolyamid aus $\omega$−Aminocarbonsäuren mit 2 bis 12 C−Atomen, bevorzugt 6 bis 12 C−Atomen und/oder Lactamen mit 4 bis 12 C−Atomen, bevorzugt 6 bis 12 C−Atomen und/oder aus Diaminen, bevorzugt aliphatischen Diaminen, mit 2 bis 12 C−Atomen, bevorzugt mit 2 bis 6 C−Atomen, Polyetherdiaminen und Dicarbonsäuren, bevorzugt linearen Dicarbonsäuren, mit 2 bis 12 C−Atomen und/oder dimerisierten Fettsäuren ist, wobei Lactam−6, Lactam−11, Lactam−12, $\omega$−Aminocapron−säure, $\omega$−Aminoundecansäure, $\omega$−Aminododecansäure, Dimethylendiamin, Tetramethylendiamin, He−xamethylendiamin, Polyetherdiamin, Oxalsäure, Bernsteinsäure, Adipinsäure, Sebazinsäure, Dodecandisäure, Azelainsäure, dimeriserte Fettsäure aus gesättigten Fettsäuren mit 17 bis 19 C−Atomen oder deren Mischungen besonders bevorzugt sind.

24. Stärkefaser gemäss Anspruch 1, dadurch gekennzeichnet, dass Komponente (C) ausgewählt ist aus der Gruppe, die optische Aufheller, Antioxidantien, Stabilisatoren, Füllstoffe, Antiflamm−Mittel, Mattierungsmittel, Farbstoffe, Pigmente, Verarbeitungshilfsmittel und Verzweigungs−/Vernetzungsmittel umfasst.

25. Stärkefaser gemäss Anspruch 24, dadurch gekennzeichnet, dass das Verzweigungs− oder Vernetzungsmittel isocyanat−, formaldehyd−, epoxy−, anhydrid−, ether−, ester−, und/oder amidbildende Gruppen enthält.

26. Stärkefaser gemäss den Ansprüchen 1 bis 25, dadurch gekennzeichnet, dass sie eine Stapelfaser, ein Monofilament oder ein Multifilament ist.

27. Stärkefaser gemäss Anspruch 26, dadurch gekennzeichnet, dass sie eine Profil−, Hohl−, Schaum−, koextrudierte Mehrkomponenten− oder poröse Faser ist.

28. Verfahren zur Herstellung von Stärkefasern gemäss einem der Ansprüche 1 bis 27 nach dem an sich bekannten Schmelzspinnverfahren, das die Schritte:
    (a) Herstellung mindestens einer Spinnschmelze,
    (b) Schmelzespinnen mit wahlweiser vorgeschalteter Schmelzefiltration
    (c) Kühlen,
    (d) Aufbringen der Spinnpräparation
    (e) Verstrecken
    und
    (f) Nachbehandlung
umfasst, dadurch gekennzeichnet, dass man
    − in Schritt (a) die Komponenten der Stärkefaser, die wahlweise separat oder gemeinsam vorgranuliert sind, in mindestens einem Spinnextruder aufschmilzt,

und
- ohne abzukühlen zum Spinndüsenpaket fördert,
wobei wahlweise eine Schmelzefiltration vorgeschaltet ist.

29. Verfahren gemäss Anspruch 28 zur Herstellung von Koextrusionsfasern, dadurch gekennzeichnet dass man im Schritt (f) die Stärkefaser texturiert.

30. Verfahren gemäss Anspruch 28, dadurch gekennzeichnet, dass man eine Spinnschmelze mit einem Wassergehalt von 1 bis 15 Gew.−%, bevorzugt 2 bis 10 Gew.−%, bezogen auf den Anteil der Stärkeformmasse [Komponente (A)], einsetzt.

31. Verfahren gemäss Anspruch 28 zur Herstellung von Koextrusionsfasern, dadurch gekennzeichnet, dass man im Schmelzespinnschritt (b) Komponente (A) und Komponente (B) getrennt zur Spinndüsenplatte fördert und an der Spinndüse vereinigt, wobei gegebenenfalls beide oder eine der beiden Komponenten einen Haftvermittler enthalten können.

32. Verfahren gemäss Anspruch 28, dadurch gekennzeichnet, dass im Kühlschritt (c) die frisch gesponnenen Stärkefasern/−fäden in einer Kühlstrecke durch ein flüssiges oder gasförmiges Kühlmedium abgekühlt werden.

33. Verfahren gemäss Anspruch 32, dadurch gekennzeichnet, dass das Kühlmedium ausgewählt ist aus der Gruppe, die Luft, Stickstoff, Kohlendioxid und Wasser umfasst.

34. Verfahren gemäss Anspruch 32, dadurch gekennzeichnet, dass das Kühlmedium eine unpolare, nicht−wasserlösliche, bei Raumtemperatur flüssige Substanz, bevorzugt Siliconöl oder Fettsäureester, ist.

35. Verfahren gemäss Anspruch 28, dadurch gekennzeichnet, dass man im Verstreckungsschritt (e) die Stärkefaser mittels Wasserdampf, Heissdampf, heisser Luft, Kontaktwärme oder Infrarotstrahlen, bevorzugt Wasserdampf oder Kontaktwärme, behandelt.

36. Verfahren gemäss Anspruch 28, dadurch gekennzeichnet, dass man im Nachbehandlungsschritt (f) die Stärkefaser thermofixiert und/oder aviviert und/oder kräuselt und/oder schneidet.

37. Verfahren gemäss Anspruch 36, dadurch gekennzeichnet, dass zum Avivieren Substanzen mit unpolaren Endgruppen und/oder polaren Kopfgruppen, bevorzugt Fettsäuren, Wachse, Seifen und Polysaccharidderivate, verwendet werden.

38. Verfahren gemäss Anspruch 28 zur Herstellung von porösen Fasern, dadurch gekennzeichnet, dass man in einem ersten Schritt eine homogene Faser aus einer die Faserkomponenten (A) und (B) enthaltende Schmelzespinnmasse herstellt und in einem zweiten Schritt diese Faser mit einem Mittel behandelt, welches Lösungsmittel nur für eine der beiden Faserkomponenten ist.

39. Verfahren gemäss den Ansprüchen 28 und 31 zur Herstellung von Hohlfasern oder porösen Fasern, dadurch gekennzeichnet, dass man in einem ersten Schritt eine Koextrusionsfaser herstellt und in einem zweiten Schritt eine der beiden Stärkefaserkomponenten im gegebenenfalls beheizten Wasserbad oder in einem Lösungsmittelbad mindestens teilweise entfernt.

40. Verfahren gemäss Anspruch 39 zur Herstellung von Feinstfasern, dadurch gekennzeichnet, dass der Mantel einer Koextrusionsfaser, deren Kern ein superfeines Filament ist, in einem Lösungsmittel− oder Wasserbad abgetrennt wird.

41. Verwendung von Stärkefasern gemäss einem der Ansprüche 1 bis 27 zur Herstellung von geordneten und ungeordneten Gebilden, wie Gewebe, Gewirke, Gestricke, Vliese, Filze, Watten und Füllmaterialien.

42. Verwendung von Stärkefasern gemäss einem der Ansprüche 1 bis 27 als Trenngarne und Trennfasern.

43. Verwendung von Trenngarnen und Trennfasern gemäss Anspruch 42 zur Herstellung von Trenngeweben, Trenngewirken und Trennvliesen.

**44.** Verwendung von Stärkefasern gemäss einem der Ansprüche 1 bis 27 als Klebefasern und Klebegarnen.

**45.** Verwendung von Klebegarnen und Klebefasern gemäss Anspruch 44 zur Herstellung von Klebegeweben, Klebegewirken, Klebevliesen und Klebefilzen.

**46.** Verwendung von Stärkefasern gemäss einem der Ansprüche 1 bis 27 zur Herstellung von verstärkten oder veredelten Papieren.

**47.** Verwendung von Stärkefasern gemäss einem der Ansprüche 1 bis 27 zur Herstellung von chirurgischem Nähmaterial, biologisch abbaubaren Filtern, insbesondere Zigarettenfiltern, Hygienevliesen oder textilen Gebilden für den einmaligen Gebrauch.

**48.** Verwendung von Stärkefasern gemäss einem der Ansprüche 1 bis 27 zur Herstellung von Textilgeweben, wie Kleidung, mit verbessertem Tragekomfort durch verbesserte Feuchtigkeitsaufnahme.

**49.** Verwendung von Stärkefasern gemäss einem der Ansprüche 1 bis 27 zur Herstellung von recyclebaren Verbundmaterialien, Geweben, Strickwaren oder Klebefasern.

**50.** Verwendung von Stärkefasern gemäss einem der Ansprüche 1 bis 27 zur Herstellung von saugfähigen Vliesen, insbesondere Verbänden, Windeln, Watte, Putzwolle oder Filtermaterialien mit hoher Absorption.

**51.** Verwendung von porösen Fasern oder Hohlfasern gemäss den Ansprüchen 38 und 39 sowie Feinstfasern gemäss Anspruch 40 zur Herstellung von Isoliermaterialien, Füllmaterialien, Watten, ungeordneten und geordneten Gebilden.

**52.** Verwendung von Feinstfasern gemäss Anspruch 40 für die Herstellung von textilen Gebilden.

Fig. 1

(20)

11A 11B

12 13 14 15

1 2 3 4 5 6

7 8 9 10